# EUROPÄISCHE PATENTANMELDUNG

(11) **EP 3 834 972 A1**
(43) Veröffentlichungstag der Anmeldung: **16.06.2021**
(21) Anmeldenummer: 19215080.3
(22) Anmeldetag: 11.12.2019
(51) Int. Cl.: B23B 31/107, B23B 31/00

(54) **VORRICHTUNG ZUR DREHMOMENTÜBERTRAGUNG VON EINEM BOHRGERÄT AUF EINE BOHRKRONE**

(71) Anmelder: Hilti Aktiengesellschaft, 9494 Schaan (LI)
(72) Erfinder: Goetz, Florian, 6820 Frastanz (AT)
(74) Vertreter: Hilti Aktiengesellschaft Corporate Intellectual Property

(57) **Zusammenfassung**

Vorrichtung (10) zur Übertragung eines Drehmomentes von einem Bohrgerät auf eine Bohrkrone, aufweisend ein Einsteckende (14) und eine Werkzeugaufnahme (13). Das Einsteckende (14) ist aus einem ersten Außenkonusbereich, einem Nutbereich und einem zweiten Außenkonusbereich aufgebaut und umfasst erste und zweite Längsnuten. Die Werkzeugaufnahme (13) ist aus einem Drehmitnahmeteil (42), das einen inneren Mitnehmerbereich mit ersten inneren Drehmitnehmern und zweiten inneren Drehmitnehmern aufweist, und einer Verriegelungseinrichtung (43) aufgebaut. Im verbundenen Zustand der Vorrichtung (10) greifen die ersten inneren Drehmitnehmer in die ersten Längsnuten und die zweiten inneren Drehmitnehmer in die zweiten Längsnuten ein.

## Beschreibung

### Technisches Gebiet

Die vorliegende Erfindung betrifft eine Vorrichtung zur Übertragung eines Drehmomentes von einem Bohrgerät auf eine Bohrkrone gemäß dem Oberbegriff des Anspruchs 1.

### Stand der Technik

EP 1 211 005 B1 offenbart eine bekannte Vorrichtung zur Drehmomentübertragung von einem Bohrgerät auf eine Bohrkrone. Dabei ist die Vorrichtung zur Drehmomentübertragung zwischen dem Bohrgerät und der Bohrkrone angeordnet und überträgt das Drehmoment, das von einem Bohrmotor des Bohrgerätes erzeugt wird, auf die Bohrkrone. Die Vorrichtung zur Drehmomentübertragung umfasst eine Werkzeugaufnahme, die fest mit dem Bohrgerät verbunden ist oder über eine lösbare Verbindung mit dem Bohrgerät verbunden wird, und ein Einsteckende, das fest mit der Bohrkrone verbunden ist oder über eine lösbare Verbindung mit der Bohrkrone verbunden wird.

Das Einsteckende ist hülsenförmig aus einem ersten Außenkonusbereich, einem Nutbereich, einem zweiten Außenkonusbereich und einem Zylinderbereich aufgebaut und umfasst erste Längsnuten, die sich über den ersten Außenkonusbereich, den Nutbereich, den zweiten Außenkonusbereich und den Zylinderbereich erstrecken, und zweite Längsnuten, die sich über den zweiten Außenkonusbereich und den Zylinderbereich erstrecken.

Die Werkzeugaufnahme ist aus einem Drehmitnahmeteil und einer Verriegelungseinrichtung aufgebaut. Die Verriegelungseinrichtung ist parallel zu einer Längsachse der Werkzeugaufnahme zwischen einer Aufnahmestellung und einer Verriegelungsstellung verstellbar, wobei das Einsteckende in der Aufnahmestellung in die Werkzeugaufnahme einführbar ist und in der Verriegelungsstellung mit der Werkzeugaufnahme verbunden ist. Das Drehmitnahmeteil weist einen Grundkörper und ein Zwischenelement auf, die im verbundenen Zustand der Vorrichtung formschlüssig verbunden sind. Das Zwischenelement umfasst einen inneren Mitnehmerbereich, der erste innere Drehmitnehmer mit einer ersten Tiefe und ersten Breite und zweite innere Drehmitnehmer mit einer zweiten Tiefe und zweiten Breite aufweist, und einen äusseren Mitnehmerbereich, der erste äußere Drehmitnehmer mit einer dritten Tiefe und dritten Breite aufweist. Der Grundkörper ist hülsenförmig ausgebildet mit einem Innenkonusbereich und einem Drehmitnahmebereich, der erste Drehmitnahmenuten aufweist, wobei die ersten äußeren Drehmitnehmer des Zwischenelements in die ersten Drehmitnahmenuten des Grundkörpers eingreifen. Im verbundenen Zustand der Werkzeugaufnahme und des Einsteckendes greifen die ersten inneren Drehmitnehmer in die ersten Längsnuten ein, die zweiten inneren Drehmitnehmer greifen in die zweiten Längsnuten ein und die ersten äußeren Drehmitnehmer greifen in die ersten Drehmitnahmenuten ein.

Die aus EP 1 211 005 B1 bekannte Vorrichtung zur Drehmomentübertragung hat den Nachteil, dass die Werkzeugaufnahme und das Einsteckende nur für Bohrgeräte mit Leistungen bis ca. 2,5 kW zugelassen sind. Bei größeren Leistungen ist die Flächenpressung sehr hoch, was zu einer Beschädigung der inneren und äusseren Drehmitnehmer der Werkzeugaufnahme führen kann. Außerdem wird die Lebensdauer der Werkzeugaufnahme und des Einsteckendes reduziert.

### Darstellung der Erfindung

Die Aufgabe der vorliegenden Erfindung besteht darin, die Werkzeugaufnahme und das Einsteckende der aus EP 1 211 005 B1 bekannten Vorrichtung zur Drehmomentübertragung dahingehend weiterzuentwickeln, dass die neue Vorrichtung höhere Drehmomente als die alte Vorrichtung übertragen kann, das neue Einsteckende mit der alten Werkzeugaufnahme verbunden werden kann und die neue Werkzeugaufnahme nicht mit dem alten Einsteckende verbunden werden kann.

Diese Aufgabe wird bei der eingangs genannten Vorrichtung zur Übertragung eines Drehmoments erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass die erste Tiefe der ersten inneren Drehmitnehmer und die zweite Tiefe der zweiten inneren Drehmitnehmer gleich sind und die zweiten Längsnuten des Einsteckendes sich zusätzlich über den ersten Außenkonusbereich und den Nutbereich erstrecken. Dadurch, dass bei der neuen Werkzeugaufnahme die zweite Tiefe der zweiten inneren Drehmitnehmer gleich der ersten Tiefe der ersten inneren Drehmitnehmer ist, weisen die zweiten inneren Drehmitnehmer bei der neuen Werkzeugaufnahme eine größere zweite Tiefe auf als bei der alten Werkzeugaufnahme. Die größere zweite Tiefe der zweiten inneren Drehmitnehmer vergrößert die Kontaktfläche der neuen Werkzeugaufnahme zum neuen Einsteckende und ermöglicht die Übertragung höherer Drehmomente vom Bohrgerät auf die Bohrkrone.

Die größere zweite Tiefe der zweiten inneren Drehmitnehmer verhindert, dass die neue Werkzeugaufnahme, die für leistungsstarke Bohrgeräte ausgelegt ist, mit dem alten Einsteckende, das nur für Bohrgeräte mit Leistungen bis ca. 2,5 kW zugelassen ist, verbunden werden kann und erhöht dadurch die Betriebssicherheit des Bohrgerätes. Da sich die zweiten Längsnuten des alten Einsteckendes nur über den zweiten Außenkonusbereich erstrecken und eine geringe Tiefe aufweisen, sind die zweiten inneren Drehmitnehmer der neuen Werkzeugaufnahme zu tief und können nicht in die zweiten Längsnuten des alten Einsteckendes eingeführt werden.

Die zweiten Längsnuten, die sich beim neuen Einsteckende über den ersten Außenkonusbereich, den Nutbereich und den zweiten Außenkonusbereich erstrecken, weisen eine größere Tiefe auf als die zweiten Längsnuten des alten Einsteckendes. Dies führt dazu, dass das neue Einsteckende mit der alten Werkzeugaufnahme verbunden werden kann. Die zweiten inneren Drehmitnehmer des inneren Mitnehmerbereichs greifen in die zweiten Längsnuten des neuen Einsteckende ein. Das neue Einsteckende ist für leistungsstarke Bohrgeräte ausgelegt und für größere Kräfte und Drehmomente zugelassen als die alte Werkzeugaufnahme, was im Betrieb unkritisch ist. Ein Einsteckende mit Leistungen bzw. Drehmomenten zu betreiben, die kleiner sind als der zugelassene Höchstwert, kann sich positiv auf die Lebensdauer des Einsteckende auswirken.

Bevorzugt sind die erste Breite der ersten inneren Drehmitnehmer und die zweite Breite der zweiten inneren Drehmitnehmer gleich. Die gleiche Tiefe und gleiche Breite der ersten und zweiten inneren Drehmitnehmer hat den Vorteil, dass keine Zuordnung der ersten inneren Drehmitnehmer zu den ersten Längsnuten bzw. der zweiten inneren Drehmitnehmer zu den zweiten Längsnuten erforderlich ist. Jeder innere Drehmitnehmer kann in jede Längsnut eingeführt werden.

In einer bevorzugten Variante sind der Innenkonusbereich und der innere Mitnehmerbereich einteilig ausgebildet. Die einteilige Ausbildung des Drehmitnahmeteils hat den Vorteil, dass gegenüber der alten Vorrichtung zur Drehmomentübertragung eine Schnittstelle wegfällt. Bei der alten Vorrichtung zur Drehmomentübertragung wird die Kraft bzw. das Drehmoment vom Grundkörper auf das Zwischenelement (1. Schnittstelle) und vom Zwischenelement auf das Einsteckende (2. Schnittstelle) übertragen. Bei der neuen Vorrichtung zur Drehmomentübertragung muss die Kraft bzw. das Drehmoment nur vom Drehmitnahmeteil auf das Einsteckende übertragen werden.

In einer alternativen Variante sind der Innenkonusbereich und der innere Mitnehmerbereich mehrteilig ausgebildet. Die mehrteilige Ausbildung des Drehmitnahmeteils hat den Vorteil, dass Drehmitnahmeteile mit einer komplexen Geometrie einfacher gefertigt können als bei einer einteiligen Ausbildung des Drehmitnahmeteils.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Vorrichtung zur Drehmomentübertragung von einem Bohrgerät auf eine Bohrkrone;
- FIGN. 2A,: B eine Werkzeugaufnahme (FIG. 2A) und ein Einsteckende (FIG. 2B) der in FIG. 1 dargestellten erfindungsgemäßen Vorrichtung zur Drehmomentübertragung;
- FIGN. 3A, B: das Einsteckende der erfindungsgemäßen Vorrichtung zur Drehmomentübertragung in einer Seitenansicht (FIG. 3A) und in einem Längsschnitt entlang der Schnittebene A-A in FIG. 3A (FIG. 3B);
- FIGN. 4A, B: die erfindungsgemäße Vorrichtung zur Drehmomentübertragung der FIG. 1 im verbundenen Zustand, in dem das Einsteckende der FIG. 2B mit der Werkzeugaufnahme der FIG. 2A verbunden ist, in einer Seitenansicht (FIG. 4A) und in einem Längsschnitt entlang der Schnittebene A-A in FIG. 4A (FIG. 4B); und
- FIGN. 5A-C: ein Drehmitnahmeteil der Werkzeugaufnahme in einer Seitenansicht (FIG. 5A), in einem Längsschnitt entlang der Schnittebene A-A in FIG. 5A (FIG. 5B) und in einer Draufsicht auf die Schnittstelle zum Einsteckende (FIG. 5C).

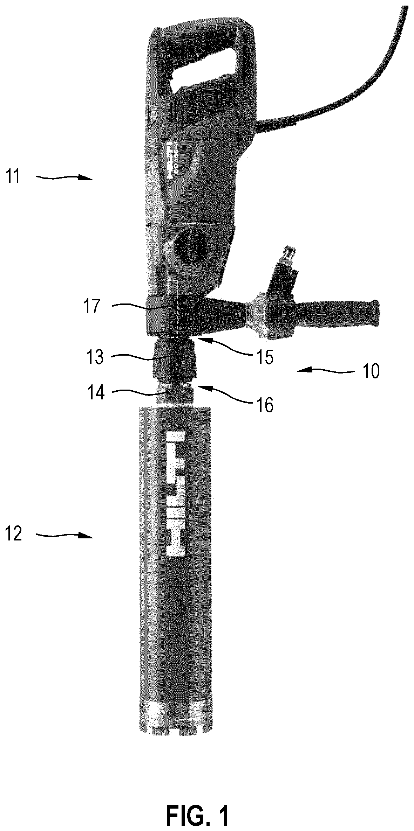

**FIG. 1** zeigt eine erfindungsgemäße Vorrichtung **10** zur Übertragung eines Drehmomentes von einem Bohrgerät 11 auf eine Bohrkrone **12.** Die Vorrichtung 10 ist zwischen dem Bohrgerät 11 und der Bohrkrone 12 angeordnet und überträgt das Drehmoment vom Bohrgerät 11 auf die Bohrkrone 12.

Die Vorrichtung 10 ist aus einer Werkzeugaufnahme **13,** die mit dem Bohrgerät 11 verbunden ist, und einem Einsteckende **14,** das mit der Bohrkrone 12 verbunden ist, aufgebaut. Die Vorrichtung 10 ist über eine erste Verbindung **15** mit dem Bohrgerät 11 und über eine zweite Verbindung **16** mit der Bohrkrone 12 verbunden. Im verbundenen Zustand der Vorrichtung 10 erfolgt die Drehmomentübertragung über folgende Komponenten: Antriebswelle **17** des Bohrgerätes 11, Werkzeugaufnahme 13, Einsteckende 14 und Bohrkrone 12. Der verbundene Zustand der Vorrichtung 10 ist definiert als Zustand, in dem die Werkzeugaufnahme 13 und das Einsteckende 14 verbunden sind.

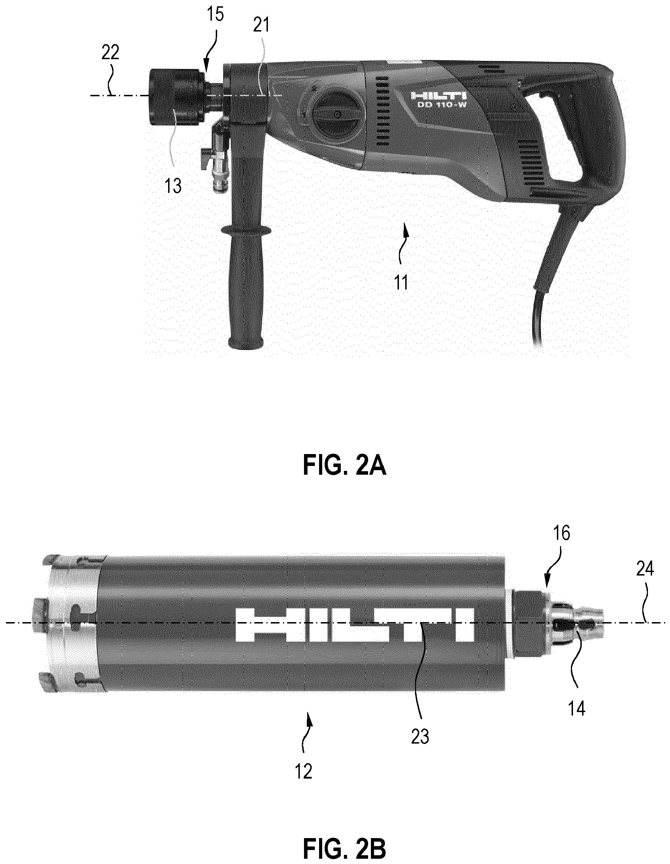

**FIGN. 2A****, B** zeigen das Bohrgerät 11 mit der Werkzeugaufnahme 13 (FIG. 2A) und die Bohrkrone 12 mit dem Einsteckende 14 (FIG. 2B) der erfindungsgemäßen Vorrichtung 10. Die Werkzeugaufnahme 13 und das Einsteckende 14 bilden im verbundenen Zustand die erfindungsgemäße Vorrichtung 10 der FIG. 1.

Die Werkzeugaufnahme 13 ist mit dem Bohrgerät 11 über die erste Verbindung 15 verbunden, die im Ausführungsbeispiel als lösbare Verbindung ausgebildet ist; alternativ kann die Werkzeugaufnahme 13 über eine unlösbare erste Verbindung 15 mit dem Bohrgerät 11 verbunden sein. Da es sich bei der Werkzeugaufnahme 13 um ein Verschleißteil handelt, macht es Sinn, die Werkzeugaufnahme 13 als separate Komponente auszubilden und über eine lösbare erste Verbindung mit der Antriebswelle 17 des Bohrgerätes 11 zu verbinden. Um sicherzustellen, dass das Bohrgerät 11 nur mit einer zugelassenen Werkzeugaufnahme 13 betrieben wird, ist es sinnvoll, die erste Verbindung 15 so auszubilden, dass sie nur mit einem Spezialwerkzeug betätigt werden kann.

Das Einsteckende 14 ist mit der Bohrkrone 12 über die zweite Verbindung 16 verbunden, die im Ausführungsbeispiel als lösbare Verbindung ausgebildet ist. Dazu weist die Bohrkrone 12 ein Innengewinde auf, das mit einem Außengewinde des Einsteckendes 14 verbunden wird. Die lösbare zweite Verbindung 16 ist beispielsweise als metrische ISO-Gewindeverbindung oder sonstige lösbare Verbindung ausgebildet. Anstelle der lösbaren zweiten Verbindung 16 kann das Einsteckende 14 unlösbar mit der Bohrkrone 12 verbunden sein; dazu kann das Einsteckende 14 mit der Bohrkrone 12 beispielsweise durch Schweißen oder sonstige Verfahren unlösbar verbunden werden.

Die Antriebswelle 17 ist um eine erste Drehachse **21** drehbar ausgebildet, die im verbundenen Zustand der Werkzeugaufnahme 13 und des Bohrgerätes 11 mit einer Längsachse **22** der Werkzeugaufnahme 13 zusammenfällt. Die Bohrkrone 12 ist im Betrieb um eine zweite Drehachse **23** drehbar ausgebildet, die im verbundenen Zustand des Einsteckendes 14 und der Bohrkrone 12 mit einer Längsachse **24** des Einsteckendes 14 zusammenfällt. Zur Unterscheidung wird die Längsachse 22 der Werkzeugaufnahme 13 als erste Längsachse 22 und die Längsachse 24 des Einsteckendes 14 als zweite Längsachse 24 bezeichnet. Im verbundenen Zustand des Bohrgerätes 11 und der Bohrkrone 12 sind die erste Längsachse 22 und zweite Längsachse 24 koaxial zueinander angeordnet.

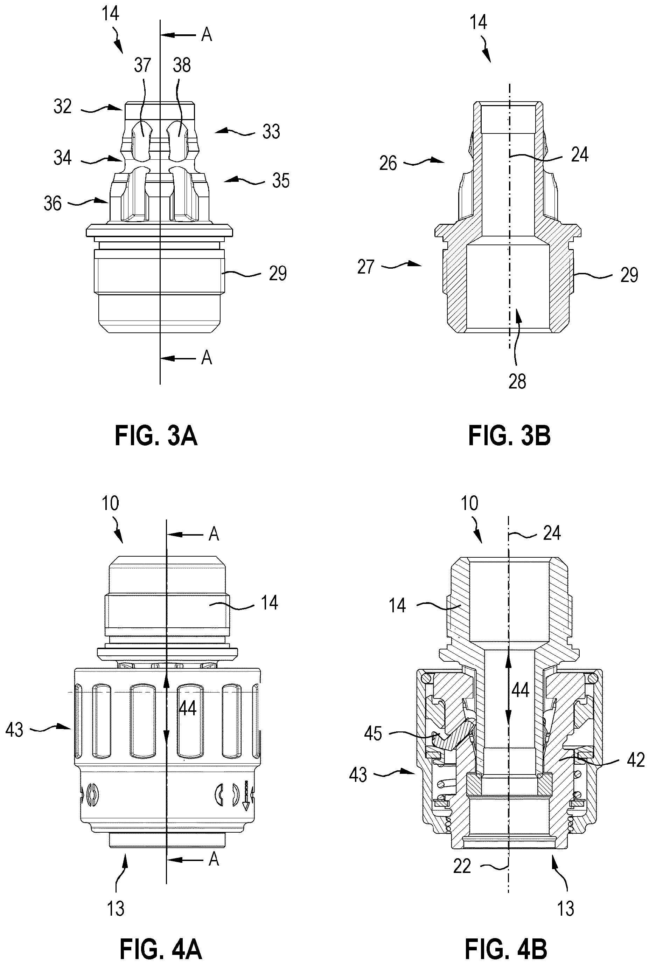

**FIGN. 3A****, B** zeigen das Einsteckende 14 der erfindungsgemäßen Vorrichtung 10 zur Drehmomentübertragung im nicht-verbundenen Zustand der Vorrichtung 10 in einer Seitenansicht (FIG. 3A) und in einem Längsschnitt entlang der Schnittebene A-A in FIG. 3A (FIG. 3B). Das Einsteckende 14 ist aus einem ersten Abschnitt **26** und einem zweiten Abschnitt **27** aufgebaut, die im Ausführungsbeispiel einteilig ausgebildet sind und eine zentrale Durchgangsbohrung **28** aufweisen.

Der zweite Abschnitt 27 des Einsteckendes 14 weist ein Außengewinde **29** auf, das mit einem passenden Innengewinde der Bohrkrone 12 die zweite Gewindeverbindung 16 bildet. Der erste Abschnitt 26 des Einsteckendes 14 ist aus fünf Abschnitten zusammengesetzt und umfasst einen Stirnbereich **32,** einen ersten Außenkonusbereich **33,** einen Nutbereich **34,** einen zweiten Außenkonusbereich **35** und einen Zylinderbereich **36.** Der erste und zweite Außenkonusbereich 33, 35 weisen eine erste bzw. zweite konische Außenfläche auf, die sich in Richtung der Bohrkrone 12 erweitert. Die konischen Außenflächen werden beispielsweise durch Drehen hergestellt; durch Fertigung der ersten und zweiten konischen Außenfläche in einer Aufspannung kann eine hohe Fertigungsgenauigkeit erzielt werden.

Das Einsteckende 14 weist erste Längsnuten **37** und zweite Längsnuten **38** auf, die sich parallel zur zweiten Längsachse 24 des Einsteckendes 14 erstrecken und auf der Außenseite des ersten Abschnittes 26 angeordnet sind. Die ersten und zweiten Längsnuten 37, 38 sind identisch ausgebildet und erstrecken sich über den ersten Außenkonusbereich 33, den Nutbereich 34 und den zweiten Außenkonusbereich 35 sowie über den Zylinderbereich 36. Die ersten und zweiten Längsnuten 37, 38 sind in einer Umfangsrichtung **39** des Einsteckendes 14 gleichmäßig verteilt und abwechselnd angeordnet, wobei jede erste Längsnut 37 zwischen zwei zweiten Längsnuten 38 angeordnet ist. Im Ausführungsbeispiel weist das Einsteckende 14 drei erste Längsnuten 37 und drei zweite Längsnuten 38 auf.

**FIGN. 4A****, B** zeigen die erfindungsgemäße Vorrichtung 10 zur Drehmomentübertragung im verbundenen Zustand, in dem das Einsteckende 14 mit der Werkzeugaufnahme 13 verbunden ist, in einer Seitenansicht (FIG. 4A) und in einem Längsschnitt entlang der Schnittebene A-A in FIG. 4A (FIG. 4B).

Die Werkzeugaufnahme 13 ist aus einem Drehmitnahmeteil **42** und einer Verriegelungseinrichtung **43** aufgebaut. Die Verriegelungseinrichtung 43 ist relativ zum Drehmitnahmeteil 42 verstellbar ausgebildet, wobei die Verriegelungseinrichtung 43 in einer Längsrichtung **44,** die parallel zur ersten Längsachse 22 der Werkzeugaufnahme 13 verläuft, verschiebbar und um die erste Längsachse 22 der Werkzeugaufnahme 13 drehbar ausgebildet ist. Die Verriegelungseinrichtung 43 ist zwischen mehreren Stellungen verstellbar, die als Grundstellung, Aufnahmestellung und Verriegelungsstellung bezeichnet werden.

Um das Einsteckende 14 formschlüssig mit der Werkzeugaufnahme 13 verbinden zu können, wird die Verriegelungseinrichtung 43 aus der Grundstellung in Längsrichtung 44 in die Aufnahmestellung verschoben. In der Aufnahmestellung wird das Einsteckende 14 in die Werkzeugaufnahme 13 eingeführt. Zum Verriegeln der Vorrichtung 10 wird die Verriegelungseinrichtung 43 um die erste Längsachse 22 in die Verriegelungsstellung gedreht. Dabei greifen Verriegelungselemente **45** der Verriegelungseinrichtung 43 in den Nutbereich 34 des Einsteckendes 14 ein und verriegeln das Einsteckende 14 mit der Werkzeugaufnahme 13. Die Grundstellung der Verriegelungseinrichtung 43 ist optional und kann entfallen, notwendig sind die Aufnahmestellung und Verriegelungsstellung der Verriegelungseinrichtung 43.

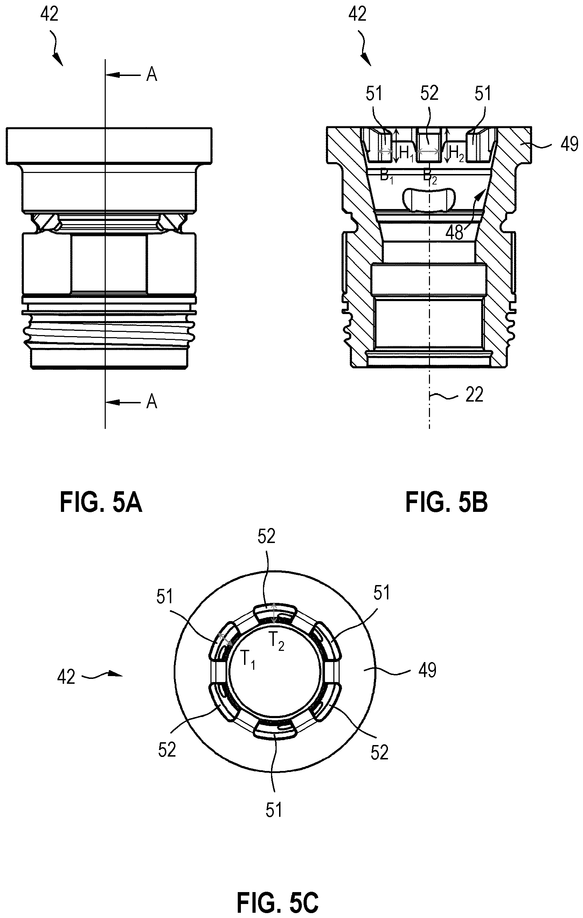

**FIGN. 5A-C** zeigen das Drehmitnahmeteil 42 der Werkzeugaufnahme 13 in einer Seitenansicht (FIG. 5A), in einem Längsschnitt entlang der Schnittebene A-A in FIG. 5A (FIG. 5B) und in einer Draufsicht auf die Schnittstelle zum Einsteckende 14 (FIG. 5C).

Das Drehmitnahmeteil 42 ist hülsenförmig mit einer zentralen Durchgangsbohrung **47** ausgebildet und aus mehreren Abschnitten zusammengesetzt, die im Ausführungsbeispiel einteilig ausgebildet sind. Neben dem Innengewinde umfasst das Drehmitnahmeteil 42 einen Innenkonusbereich **48** und einen inneren Mitnehmerbereich **49.** Der innere Mitnehmerbereich 49 weist erste innere Drehmitnehmer **51** und zweite innere Drehmitnehmer **52** auf. Im verbundenen Zustand der Vorrichtung 10 liegt der erste Außenkonusbereich des Einsteckendes 14 am Innenkonusbereich 48 des Drehmitnahmeteils 42 an, die ersten inneren Drehmitnehmer 51 greifen in die ersten Längsnuten 37 ein und die zweiten inneren Drehmitnehmer 52 greifen in die zweiten Längsnuten 38 ein.

Die ersten und zweiten inneren Drehmitnehmer 51, 52 werden unter dem Begriff "innere Drehmitnehmer" zusammengefasst. In einer Ebene **53** senkrecht zur ersten Längsachse 22 weisen die ersten inneren Drehmitnehmer 51 eine erste Breite **B₁** und erste Tiefe **T₁** und die zweiten inneren Drehmitnehmer 52 eine zweite Breite **B₂** und zweite Tiefe **T₂** auf. Parallel zur ersten Längsachse 22 erstrecken sich die ersten inneren Drehmitnehmer 51 über eine erste Höhe **H₁** und die zweiten inneren Drehmitnehmer 52 über eine zweite Höhe **H₂.** Um die Flächenpressung so klein wie möglich einzustellen, sind die erste und zweite Höhe H₁, H₂ der ersten und zweiten inneren Drehmitnehmer 51, 52 so groß wie möglich.

Erfindungsgemäß ist die erste Tiefe T₁ der ersten inneren Drehmitnehmer 51 gleich der zweiten Tiefe T₂ der zweiten inneren Drehmitnehmer 52. Bei der alten Werkzeugaufnahme ist die zweite Tiefe der zweiten inneren Drehmitnehmer 52 kleiner als bei der neuen Werkzeugaufnahme. Die gleiche Tiefe (T₁ = T₂) der ersten und zweiten inneren Drehmitnehmer 51, 52 hat den Vorteil, dass die neue Werkzeugaufnahme nicht mit dem alten Einsteckende kombiniert werden kann, da die Abmessungen der zweiten Längsnuten 38 in der Ebene senkrecht zur zweiten Längsachse 24 des Einsteckendes 14 zu klein sind, um sie mit den zweiten inneren Drehmitnehmern 52 zu kombinieren.

Im Ausführungsbeispiel der Vorrichtung 10 ist außerdem die erste Breite B₁ der ersten inneren Drehmitnehmer 51 gleich der zweiten Breite B₂ der zweiten inneren Drehmitnehmer 52. Die gleiche Tiefe (T₁ = T₂) und gleiche Breite (B₁ = B₂) der ersten und zweiten inneren Drehmitnehmer 51, 52 hat den Vorteil, dass beim Zusammenbau der Vorrichtung 10 keine Zuordnung der ersten inneren Drehmitnehmer 51 zu den ersten Längsnuten 37 bzw. der zweiten inneren Drehmitnehmer 52 zu den zweiten Längsnuten 38 erforderlich ist.

## Patentansprüche

1. Vorrichtung (10) zur Übertragung eines Drehmomentes, das von einem Bohrgerät (11) erzeugt wird, auf eine Bohrkrone (12), aufweisend:
▪ ein Einsteckende (14), das einen ersten Außenkonusbereich (33), einen Nutbereich (34) und einen zweiten Außenkonusbereich (35) sowie erste Längsnuten (37), die sich über den ersten Außenkonusbereich (33), den Nutbereich (34) und den zweiten Außenkonusbereich (35) erstrecken, und zweite Längsnuten (38), die sich über den zweiten Außenkonusbereich (35) erstrecken, aufweist, und
▪ eine Werkzeugaufnahme (13), die ein Drehmitnahmeteil (42) und eine Verriegelungseinrichtung (43) aufweist, wobei
- das Drehmitnahmeteil (42) einen Innenkonusbereich (48) und einen inneren Mitnehmerbereich (49) aufweist, wobei der innere Mitnehmerbereich (49) erste innere Drehmitnehmer (51) mit einer ersten Breite (B₁) und ersten Tiefe (T₁) und zweite innere Drehmitnehmer (52) mit einer zweiten Breite (B₂) und zweiten Tiefe (T₂) aufweist, und
- die Verriegelungseinrichtung (43) parallel zu einer Längsachse (22) der Werkzeugaufnahme (13) zwischen einer Aufnahmestellung und einer Verriegelungsstellung verstellbar ist, wobei das Einsteckende (14) in der Aufnahmestellung in die Werkzeugaufnahme (13) einführbar ist und in der Verriegelungsstellung mit der Werkzeugaufnahme (13) verbunden ist,
wobei im verbundenen Zustand der Vorrichtung (10) die ersten inneren Drehmitnehmer (51) des Drehmitnahmeteils (42) in die ersten Längsnuten (37) des Einsteckendes (14) eingreifen und die zweiten inneren Drehmitnehmer (52) des Drehmitnahmeteils (42) in die zweiten Längsnuten (38) des Einsteckendes (14) eingreifen,
**dadurch gekennzeichnet, dass** die erste Tiefe (T₁) der ersten inneren Drehmitnehmer (51) und die zweite Tiefe (T₂) der zweiten inneren Drehmitnehmer (52) gleich sind und sich die zweiten Längsnuten (38) des Einsteckendes (14) zusätzlich über den ersten Außenkonusbereich (33) und den Nutbereich (34) erstrecken.

2. Vorrichtung nach Anspruch 1, **dadurch gekennzeichnet, dass** die erste Breite (B₁) der ersten inneren Drehmitnehmer (51) und die zweite Breite (B₂) der zweiten inneren Drehmitnehmer (52) gleich sind.

3. Vorrichtung nach einem der Ansprüche 1 bis 2, **dadurch gekennzeichnet, dass** der Innenkonusbereich (48) und der innere Mitnehmerbereich (49) einteilig ausgebildet sind.

4. Vorrichtung nach Anspruch 2, **dadurch gekennzeichnet, dass** der Innenkonusbereich (48) und der innere Mitnehmerbereich (49) mehrteilig ausgebildet sind.
